(19) Europäisches Patentamt
European Patent Office
Office européen des brevets

(11) EP 4 023 692 A1

(12) # EUROPEAN PATENT APPLICATION
published in accordance with Art. 153(4) EPC

(43) Date of publication:
**06.07.2022 Bulletin 2022/27**

(21) Application number: **20857082.0**

(22) Date of filing: **31.07.2020**

(51) International Patent Classification (IPC):
***C08G 18/22*** *(2006.01)* ***C08G 18/00*** *(2006.01)*
***C08G 18/08*** *(2006.01)* ***C08G 101/00*** *(2006.01)*

(52) Cooperative Patent Classification (CPC):
**C08G 18/00; C08G 18/08; C08G 18/22**

(86) International application number:
**PCT/JP2020/029525**

(87) International publication number:
**WO 2021/039289 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2019 JP 2019155222**

(71) Applicant: **SEKISUI CHEMICAL CO., LTD.**
**Osaka-shi**
**Osaka**
**530-8565 (JP)**

(72) Inventor: **KAJITA, Tomonori**
**Atsugi-shi, Kanagawa 243-0807 (JP)**

(74) Representative: **Ter Meer Steinmeister & Partner**
**Patentanwälte mbB**
**Nymphenburger Straße 4**
**80335 München (DE)**

(54) **POLYOL-CONTAINING COMPOSITION, FOAMABLE POLYURETHANE COMPOSITION, AND POLYURETHANE FOAM**

(57) Provided is a polyol-containing composition capable of preventing a polyurethane foam from hydrolyzing and having a good foaming property, a foamable polyurethane composition, and a polyurethane foam.

The polyol-containing composition for obtaining a polyurethane foam by reacting with a polyisocyanate, the polyol-containing composition comprising a polyol, a catalyst, a foaming agent, and a filler, a content of the filler in the polyol-containing composition being 8 mass% or more, the catalyst comprising a metal catalyst containing at least one selected from the group consisting of bismuth and tin.



Processed by Luminess, 75001 PARIS (FR)

## Description

### Technical Field

The present invention relates to a polyol-containing composition, a foamable polyurethane composition, and a polyurethane foam.

### Background Art

Polyurethane foams, which have the excellent thermal insulation property and the adhesion property, are used as, for example, thermal insulators for architectural structures such as complex housing such as apartments, detached houses, various facilities for schools, and commercial buildings. A polyurethane foam can be obtained by mixing a polyol-containing composition and a polyisocyanate and foaming the mixture.

A polyurethane foam is known to hydrolyze when water is absorbed. A hydrolyzed polyurethane foam deteriorates due to an ester bond cleavage and a urethane bond cleavage to thereby reduce the durability, which is problematic.

Under the circumstances, polyurethane foams with excellent water resistance have been proposed in view of preventing polyurethane foams from deteriorating due to the hydrolysis (for example, see PTL 1). In PTL 1, a polyol-containing composition indispensably comprises a polyester polyol having a specific ratio of a dimerdiol unit to obtain a polyurethane foam with excellent water resistance.

However, as in PTL 1, a polyurethane foam can have enhanced water resistance and thus be prevented from hydrolysis when a specific polyester polyol is used; however, enhanced water resistance and prevention of hydrolysis cannot be achieved unless a specific polyester polyol is used. Thus, there is the problem of a reduced degree of freedom in designing a polyurethane foam.

### Citation List

#### Patent Literature

PTL1: JP H08-295718 A

### Summary of Invention

#### Technical Problem

According to the finding of the present inventor, it is considered that decreasing the water absorption rate of a polyurethane foam might serve as a method for preventing the hydrolysis of a polyurethane foam. An example of the method for decreasing a water absorption rate of a polyurethane foam is addition of a hydrophobic additive, which does not reduce the degree of freedom in designing a polyurethane foam. However, when a hydrophobic additive or the like is contained merely for the purpose of decreasing a water absorption rate of a polyurethane foam, the reactivity is reduced, and thus it is less likely that good foaming is obtained.

Accordingly, the present invention aims to provide a polyol-containing composition capable of preventing a polyurethane foam from hydrolyzing and having a good foaming property, a foamable polyurethane composition, and a polyurethane foam.

#### Solution to Problem

The present inventor have conducted extensive studies to solve the above problem and have found, as a result, that the above problem can be solved when a polyol-containing composition contains a filler in a specific amount or more and also contains as a catalyst at least one selected from the group consisting of bismuth and tin. Thus, the present invention as shown below has been accomplished.

The present invention is summarized as the following [1] to [10].

[1] A polyol-containing composition for obtaining a polyurethane foam by reacting with a polyisocyanate, the polyol-containing composition comprising a polyol, a catalyst, a foaming agent, and a filler,

a content of the filler in the polyol-containing composition being 8 mass% or more,
the catalyst comprising a metal catalyst containing at least one selected from the group consisting of bismuth and tin.

[2] The polyol-containing composition according to [1], wherein the metal catalyst contains bismuth.

[3] The polyol-containing composition according to [1] or [2], wherein the catalyst further comprises an imidazole derivative.

[4] The polyol-containing composition according to [3], wherein the imidazole derivative is imidazole substituted on the 1st position and the 2nd position each independently with an alkyl group having 4 or less carbon atoms.

[5] The polyol-containing composition according to [3] or [4], wherein the imidazole derivative is at least one selected from the group consisting of 1,2-dimethylimidazole and 1-isobutyl-2-methylimidazole.

[6] A foamable polyurethane composition comprising the polyol-containing composition according to any one of [1] to [5] and a polyisocyanate.

[7] The foamable polyurethane composition according to [6], wherein a content of the filler in the foamable polyurethane composition is 4 parts by mass or more per 100 parts by mass of a urethane resin.

[8] The foamable polyurethane composition according to [6] or [7], wherein a water absorption rate of a polyurethane foam obtained by reacting and foaming the foamable polyurethane composition is 1.5 g/100 $cm^2$ or less.

[9] The foamable polyurethane composition according to any one of [6] to [8], wherein the foamable polyurethane composition has an isocyanate index of 250 or more.

[10] A polyurethane foam obtained by reacting and foaming the foamable polyurethane composition according to any one of [6] to [9].

Advantageous Effects of Invention

According to the present invention, a polyol-containing composition capable of preventing a polyurethane foam from hydrolyzing and having a good foaming property, a foamable polyurethane composition, and a polyurethane foam can be provided.

Description of Embodiments

Hereinafter, the present invention will be described in details.

[Polyol-containing composition]

The polyol-containing composition of the present invention is a polyol-containing composition for obtaining a polyurethane foam by reacting with a polyisocyanate and comprises a polyol, a catalyst, a foaming agent, and a filler. The content of the filler in the polyol-containing composition is 8 mass% or more, and the catalyst comprises a metal catalyst containing at least one selected from the group consisting of bismuth and tin. The polyol-containing composition of the present invention, which comprises the filler in a specific amount or more with a specific metal catalyst as the catalyst, can prevent a polyurethane foam from hydrolyzing and have a good foaming property.

<Polyol>

The polyol-containing composition of the present invention comprises a polyol as a material for a polyurethane foam.

Examples of the polyol used in the present invention include polylactone polyols, polycarbonate polyols, aromatic polyols, alicyclic polyols, aliphatic polyols, polyester polyols, polymer polyols, and polyether polyols.

Examples of the polylactone polyol include polypropiolactone glycol, polycaprolactone glycol, and polyvalerolactone glycol.

Examples of the polycarbonate polyol include polyols obtained by dealcoholization reaction of a hydroxy group-containing compound, such as ethylene glycol, propylene glycol, butanediol, pentanediol, hexanediol, octanediol, and nonanediol, with ethylene carbonate, propylene carbonate or the like.

Examples of the aromatic polyol include bisphenol A, bisphenol F, phenol novolac, and cresol novolac.

Examples of the alicyclic polyol include cyclohexanediol, methylcyclohexanediol, isophoronediol, dicyclohexylmethanediol, and dimethyldicyclohexylmethanediol.

Examples of the aliphatic polyol include ethylene glycol, propylene glycol, butanediol, pentanediol, and hexanediol.

Examples of the polyester polyol include polymers obtained by dehydration condensation of polybasic acid and polyhydric alcohol, polymers obtained by ring-opening polymerization of $\varepsilon$-caprolactone and lactone such as $\alpha$-methyl-$\varepsilon$-caprolactone, and condensates of hydroxy carboxylic acid and the polyhydric alcohol.

Examples of the polybasic acid include adipic acid, azelaic acid, sebacic acid, isophthalic acid (m-phthalic acid), terephthalic acid (p-phthalic acid), and succinic acid. Examples of the polyhydric alcohol include bisphenol A, ethylene

glycol, 1,2-propylene glycol, 1,4-butanediol, diethylene glycol, 1,6-hexane glycol, and neopentyl glycol.

Examples of the hydroxy carboxylic acid include castor oil and reaction products of castor oil and ethylene glycol.

Examples of the polymer polyol include polymers obtained by graft polymerizing an ethylenically unsaturated compound such as acrylonitrile, styrene, methyl acrylate, and methacrylate to an aromatic polyol, an alicyclic polyol, an aliphatic polyol, and polyester polyol, modified polyols of a polybutadiene polyol and polyhydric alcohol, or hydrogenated products thereof.

Examples of the modified polyol of polyhydric alcohol include those modified by reacting an alkylene oxide with a polyhydric alcohol as a base material.

Examples of the polyhydric alcohol include trihydric alcohols such as glycerin and trimethylolpropane, tetra- to octahydric alcohols such as pentaerythritol, sorbitol, mannitol, sorbitan, diglycerin, dipentaerythritol, sucrose, glucose, mannose, fructose, methylglucoside, and derivative thereof, polyols such as phloroglucinol, cresol, pyrogallol, catechol, hydroquinone, bisphenol A, bisphenol F, bisphenol S, 1,3,6,8-tetrahydroxynaphthalene, and 1,4,5,8-tetrahydroxyanthracene, (co)polymers of castor oil polyol and hydroxyalkyl (meth)acrylate, and polyfunctional (for example, 2 to 100 functional groups) polyols such as polyvinyl alcohols, and condensates (novolac) of phenol and formaldehyde.

The method for modifying polyhydric alcohols is not particularly limited and a method including adding an alkylene oxide (hereinafter also referred to as "AO") can be preferably used. Examples of the AO include AO having 2 to 6 carbon atoms such as ethylene oxides (hereinafter also referred to as "EO"), 1,2-propylene oxides (hereinafter also referred to as "PO"), 1,3-propylene oxides, 1,2-butylene oxides, and 1,4-butylene oxides.

Of these, PO, EO, and 1,2-butylene oxides are preferable in view of properties and reactivity, with PO and EO being more preferable. When using two or more AOs (for examples, PO and EO), the addition method can be block addition or random addition, or a combination thereof.

Examples of the polyether polyol include polymers obtained by ring-opening polymerizing at least one of alkylene oxides, such as an ethylene oxide, a propylene oxide, and a tetrahydrofuran, in the presence of at least one active hydrogen compound having low molecular weight and two or more active hydrogens. Examples of the active hydrogen compound having low molecular weight and two or more active hydrogens include diols such as bisphenol A, ethylene glycol, propylene glycol, butylene glycol, and 1,6-hexanediol, triols such as glycerin and trimethylol propane, and amines such as ethylenediamine, and butylenediamine.

The polyol used in the present invention is preferably at least one selected from the group consisting of polyester polyols and polyether polyols. Further, polyols having two hydroxy groups are preferable. Of these, aromatic polyester polyols, which are polyester polyols having an aromatic ring, are preferable in view of enhancing fire retardancy. The aromatic polyester polyols are more preferably obtained by dehydration condensing polybasic acid having an aromatic ring such as isophthalic acid (m-phthalic acid) and terephthalic acid (p-phthalic acid) and dihydric alcohol such as bisphenol A, ethylene glycol, and 1,2-propylene glycol.

The hydroxy value of the polyol is preferably 20 to 300 mg KOH/g, more preferably 40 to 280 mg KOH/g, and further preferably 100 to 250 mg KOH/g. When a hydroxy value of the polyol is the above-described upper limit value or less, the viscosity of the polyol-containing composition is likely to reduce and is thus preferable in terms of handleability. On the other hand, when a hydroxy value of the polyol is the above-described lower limit value or more, an increased crosslink density of a polyurethane foam enhances the strength.

The hydroxy value of a polyol can be measured in accordance with JIS K 1557-1:2007.

The content of the polyol in the polyol-containing composition of the present invention is preferably 15 to 80 mass%, more preferably 25 to 70 mass%, and further preferably 30 to 60 mass%. When a content of the polyol is the above-described lower limit value or more, the polyol and the polyisocyanate are easily reacted, which is preferable. On the other hand, when a content of the polyol is the above-described upper limit value or less, the viscosity of the polyol-containing composition is less likely to be too high, which is preferable in terms of handle ability.

<Catalyst>

«Metal catalyst»

The catalyst used in the polyol-containing composition of the present invention comprises a metal catalyst containing at least one selected from the group consisting of bismuth and tin. The metal catalyst is generally called a metal catalyst for resinification. In the present invention, when the above metal catalyst is contained, the reaction of the polyol and the polyisocyanate is facilitated. When the filler in a certain amount or more is contained, the reactivity of a polyurethane foam is blocked to thereby tend to reduce the foaming property; however, when the metal catalyst is contained, the foaming property of a polyurethane foam is easily well maintained. The above metal catalyst more preferably contains bismuth in view of the foaming property.

The metal catalyst is preferably a metal salt selected from the group consisting of bismuth and tin, and more preferably a bismuth salt. The metal salt is preferably a metal salt of an organic acid, and more preferably a metal salt

of carboxylic acid having 5 or more carbon atoms. When the carboxylic acid has 5 or more carbon atoms, good stability against a foaming agent, particularly hydrofluoroolefin is developed. The number of carbon atoms of a carboxylic acid is preferably 18 or less, and more preferably 12 or less, in view of the catalytic activity. The carboxylic acid is preferably aliphatic carboxylic acid, and more preferably saturated aliphatic carboxylic acid. The carboxylic acid can be a linear chain or have a branched structure, and preferably has a branched structure.

Specific examples of the carboxylic acid include octylic acid, lauric acid, versatic acid, pentanoic acid, and acetic acid, with octylic acid being preferable. That is, the transition metal salt is preferable a metal salt of octylic acid. These carboxylic acids can be a linear chain or have a branched structure, as described above. Examples of the octylic acid having a branched structure include 2-ethylhexanoic acid.

The metal salt of the carboxylic acid is preferably a bismuth salt of the carboxylic acid and a tin salt of the carboxylic acid, with a bismuth salt of octylic acid being preferable. The metal salt of the carboxylic acid can also be carboxylate of an alkylmetal. For example, the tin salt of a carboxylic acid can be a dialkyl tin carboxylate and the like, and preferably dioctyl tin carboxylate and the like.

Specific examples of the metal salt of the carboxylic acid include bismuth trioctate, dioctyltin versatate, dibutyltin dilaurate, dioctyltin dilaurate, and tin dioctylate, with bismuth trioctate and dioctyltin versatate being preferable, and bismuth trioctate being more preferable.

The amount of the above metal catalyst contained in the polyol-containing composition is preferably 0.01 to 5.0 parts by mass, more preferably 0.03 to 3.0 parts by mass, further preferably 0.06 to 2.0 parts by mass, and furthermore preferably 0.09 to 1.0 parts by mass, per 100 parts by mass of the polyol. When the amount of the above metal catalyst contained is the above-described lower limit value or more, a curing reaction rate of a foamable polyurethane composition is enhanced, thereby resulting in good foaming property. On the other hand, when the amount of the above metal catalyst contained is the above-described upper limit value or less, the reaction is easily controlled.

«Imidazole derivative»

The catalyst used in the polyol-containing composition of the present invention preferably further comprises an imidazole derivative. The imidazole derivative is generally called an amine catalyst for resinification. When the polyol-containing composition comprises an imidazole derivative in addition to the metal catalyst described above, the reactivity between the polyol and the isocyanate is increased, thereby resulting in good foaming property.

An imidazole derivative is preferably imidazole substituted on the 1st position and the 2nd position each independently with an alkyl group having 8 or less carbon atoms, and the alkyl group preferably has 6 or less carbon atoms and more preferably 4 or less carbon atoms. A preferable specific example of the imidazole derivative is represented by the following formula (1).

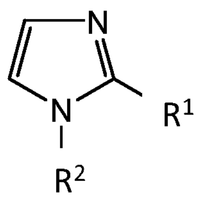

(1)

wherein $R^1$ and $R^2$ each independently represent an alkyl group having 1 to 8 carbon atoms.

$R^1$ and $R^2$ in the formula (1) each independently represent an alkyl group having 1 to 8 carbon atoms, preferably an alkyl group having 1 to 6 carbon atoms, and more preferably an alkyl group having 1 to 4 carbon atoms. When the number of carbon atoms of the alkyl groups represented by $R^1$ and $R^2$ is the above-described lower limit value or more, a steric effect is higher and hence, advantageously, the imidazole derivative is less likely to be affected by a foaming agent such as hydrofluoroolefin. On the other hand, when the number of carbon atoms of the alkyl groups represented by $R^1$ and $R^2$ is the above-described upper limit value or less, a steric effect is not excessively high, thereby enabling the reaction of the polyol and the polyisocyanate to readily proceed and resulting in a good foaming property. The alkyl groups each can be a linear chain or have a branched structure.

Examples of the imidazole derivative represented by the formula (1) include 1,2-dimethylimidazole, 1-ethyl-2-methylimidazole, 1-methyl-2-ethylimidazole, 1,2-diethylimidazole, and 1-isobutyl-2-methylimidazole, with 1,2-dimethylimidazole and 1-isobutyl-2-methylimidazole being preferable in view of enhancing the activity of the catalyst in the presence of hydrofluoroolefin and readily proceeding the reaction. Additionally, 1,2-dimethylimidazole is further preferable in view of enhancing the stability.

The amount of the imidazole derivative contained in the polyol-containing composition is preferably 0.05 to 15 parts by mass, more preferably 0.10 to 7 parts by mass, further preferably 0.15 to 3 parts by mass, and furthermore

preferably 0.20 to 1.2 parts by mass, per 100 parts by mass of the polyol. When the amount of the imidazole derivative contained is the above-described lower limit value or more, urethane bonds are easily formed, thereby allowing the reaction readily proceeds and also resulting in the good foaming property. On the other hand, when the amount of the imidazole derivative contained is the above-described upper limit value or less, the reaction rate is easily controlled, which is preferable.

«Trimerization catalyst»

The polyol-containing composition of the present invention preferably further comprises a trimerization catalyst. The trimerization catalyst is a catalyst for reacting the isocyanate group contained in the polyisocyanate to cause trimerization and thus facilitating the production of an isocyanurate ring. When a trimerization catalyst is contained, there is the advantage of obtaining a good foam by completing the reaction of unreacted isocyanate groups. Examples of the trimerization catalyst include metal catalysts and ammonium salts.
Examples of the metal catalyst used as the trimerization catalyst include potassium salts of an organic acid, with potassium carboxylates having 2 to 8 carbon atoms such as potassium octylates, for example potassium 2-ethylhexanoate, potassium acetate, potassium propionate, potassium butyrate, and potassium benzoate being preferable.
For the ammonium salt, tertiary ammonium salts such as triethylammonium salts and triphenylammonium salts, and quaternary ammonium salts such as tetramethylammonium salts, tetraethylammonium salts, and tetraphenylammonium salts can be used, and, of these, quaternary ammonium salts are preferable. The ammonium salt is, for example, an ammonium salt of the carboxylic acid. The trimerization catalysts can be used singly, or used in combinations of two or more thereof.
The amount of the trimerization catalyst contained in the polyol-containing composition is preferably 0.4 to 15 parts by mass, more preferably 0.6 to 10 parts by mass, further preferably 0.8 to 5.0 parts by mass, and furthermore preferably 0.9 to 3.5 parts by mass, per 100 parts by mass of the polyol. When the amount of the trimerization catalyst contained is the above-described lower limit value or more, a notable difference is not caused between the resinification and the trimerization activities, thereby preventing two-phase foaming and thus developing a good foaming property. On the other hand, when the amount of the trimerization catalyst contained is the above-described upper limit value or less, the resinification reaction actively proceeds, thereby facilitating the activity of trimerization by the resinification reaction heat and thus resulting in a good foaming property, whereby good foams can be formed.

<Foaming agent>

The polyol-containing composition of the present invention preferably comprises hydrofluoroolefin (HFO) as the foaming agent. In the present invention, when hydrofluoroolefin is used as the foaming agent, the stability of the foaming agent is high, the catalytic activity is less likely to be reduced, and further the environmental burden is lessened. Examples of the hydrofluoroolefin include fluoroalkene having about 3 to 6 carbon atoms. The hydrofluoroolefin can be hydrochlorofluoroolefin, which has a chlorine atom, and thus, the hydrofluoroolefin can be chlorofluoroalken having about 3 to 6 carbon atoms, for example.
More specifically, examples include trifluoropropene, tetrafluoropropenes such as HFO-1234, pentafluoropropenes such as HFO-1225, chlorotrifluoropropenes such as HFO-1233, chlorodifluoropropene, chlorotrifluoropropene, and chlorotetrafluoropropene. More specifically, examples include 1,3,3,3-tetrafluoropropene (HFO-1234ze), 1,1,3,3-tetrafluoropropene, 1,2,3,3,3-pentafluoropropene (HFO-1225ye), 1,1,1-trifluoropropene, 1,1,1,3,3-pentafluoropropene (HFO-1225zc), 1,1,1,3,3,3-hexafluorobut-2-ene, 1,1,2,3,3-pentafluoropropene (HFO-1225yc), 1,1,1,2,3-pentafluoropropene (HFO-1225yez), 1-chloro-3,3,3-trifluoropropene (HFO-1233zd), and 1,1,1,4,4,4-hexafluorobut-2-ene. Of these, HFO-1233zd is preferable.
These hydrofluoroolefins can be used singly, or used in combinations of two or more thereof.
The amount of the hydrofluoroolefin contained is preferably 10 to 60 parts by mass, more preferably 15 to 55 parts by mass, further preferably 17 to 45 parts by mass, and furthermore preferably 20 to 40 parts by mass, per 100 parts by mass of the polyol. When the amount of the hydrofluoroolefin contained is the above-described lower limit value or more, foaming is facilitated, thereby resulting in a good foaming property, whereby the density of a polyurethane foam to be obtained can be decreased. On the other hand, when the amount of the hydrofluoroolefin contained is the above-described upper limit value or less, foaming can be prevented from excessively proceeding.
The polyol-containing composition of the present invention can comprise a foaming agent other than the hydrofluoroolefin. Examples of the foaming agent other than the hydrofluoroolefin include water, organic physical foaming agents such as low-boiling point hydrocarbons such as propane, butane, pentane, hexane, heptane, cyclopropane, cyclobutane, cyclopentane, cyclohexane, and cycloheptane, chlorinated aliphatic hydrocarbon compounds such as dichloroethane, propylchloride, isopropylchloride, butylchloride, isobutylchloride, pentylchloride, and isopentylchloride, ether compounds such as diisopropyl ether; and inorganic physical foaming agents such as nitrogen gas, oxygen gas,

argon gas, and carbon dioxide gas. Of these, water, oxygen gas, and carbon dioxide gas are preferable in view of handleability, with water being more preferable in view of adjusting the isocyanate index and in view of easiness in handleability.

The amount of the foaming agent other than the hydrofluoroolefin contained in the polyol-containing composition is preferably 0.01 to 10 parts by mass, more preferably 0.1 to 5 parts by mass, and further preferably 0.5 to 3.5 parts by mass, per 100 parts by mass of the polyol. When the amount of the foaming agent contained is the above-described lower limit value or more, foaming is facilitated, whereby the density of a polyurethane foam to be obtained can be decreased. On the other hand, when the amount of the foaming agent contained is the above-described upper limit value or less, foaming can be prevented from excessively proceeding.

<Filler>

The polyol-containing composition of the present invention comprises a filler. The filler is contained in the polyol-containing composition as a solid matter and is generally a component present in the form of granules or powders in the polyol-containing composition.

The content of the filler in the polyol-containing composition of the present invention is 8 mass% or more. When a content of the filler is less than 8 mass%, the ratio of the filler in a urethane foam is not sufficient, thereby failing to decrease the water absorption rate of the polyurethane foam and thus failing to prevent the hydrolysis. The content of the filler in the polyol-containing composition of the present invention is preferably 9 mass% or more, more preferably 13 mass% or more, and further preferably 17 mass% or more, from the above viewpoint. The content of the filler in the polyol-containing composition of the present invention is preferably 45 mass% or less, more preferably 40 mass% or less, and further preferably 35 mass% or less, and this is because a filler excessively contained reduces the reactivity, thereby resulting in the difficulty in obtaining good foaming.

In the present invention, the content of the filler means the ratio of the solid matter to the polyol-containing composition, the solid matter obtained by solid-liquid separation by filtering the polyol-containing composition as described later in Examples.

The filler can be any component as long as it is solid at normal temperature (23°C) and normal pressure (1 atmosphere) and is not dissolved in the polyol-containing composition. Preferably, the filler is not hygroscopic and deliquescent in view of reducing the water absorption rate of a polyurethane foam. For the filler, it is specifically preferable to use a solid flame retardant, which is solid at normal temperature (23°C) and normal pressure (1 atmosphere). The solid flame retardant is preferably at least one selected from the group consisting of red phosphorus flame retardants, phosphate-containing flame retardants, bromine-containing flame retardants, boric acid-containing flame retardants, antimony-containing flame retardants, and metal hydroxides. When a solid flame retardant is used as the filler, the fire retardancy of a urethane foam is enhanced. The solid flame retardants can be used singly, or used in combinations of two or more thereof.

An inorganic filler other than the solid flame retardant can be used as the filler. The inorganic filler other than the solid flame retardant is preferably used in combination with the solid flame retardant in view of fire retardancy, but an inorganic filler other than the solid flame retardant can be used alone as the filler. The solid flame retardant, needless to say, can be used alone.

(Red phosphorus flame retardant)

The red phosphorus flame retardant used as the filler can be those consisting of red phosphorus, but can also be red phosphorus coated with, for example, a resin, a metal hydroxide, or a metal oxide, or red phosphorus mixed with, for example, a resin, a metal hydroxide, or a metal oxide. The resin that coats red phosphorus or is mixed with red phosphorus is not particularly limited, and examples include thermosetting resins such as phenol resins, epoxy resins, unsaturated polyester resins, melamine resins, urea resins, aniline resins, and silicone resins. The compound that coats or is mixed is preferably metal hydroxides in view of fire retardancy. The metal hydroxide used can be suitably selecting from those described later.

(Phosphorus acid salt-containing flame retardant)

Examples of the phosphorus acid salt-containing flame retardant include phosphorus acid salts that are salts of various phosphorus acids with at least one metal or compound selected from the group consisting of metals of Group IA to Group IVB in the periodic table, ammonia, aliphatic amines, aromatic amines, heterocyclic compounds containing nitrogen in the ring. The term "various phosphorus acids" herein is a concept which encompasses not only phosphoric acids but also phosphorous acid, hypophosphorous acid and the like.

Examples of the metal of Group IA to Group IVB in the periodic table include lithium, sodium, calcium, barium,

iron (II), iron (III) and aluminum.

Examples of the aliphatic amine include methylamine, ethylamine, diethylamine, triethylamine, ethylenediamine, and piperazine. Examples of the aromatic amine include aniline, o-toluidine, 2,4,6-trimethylaniline, anisidine, 3-(trifluoromethyl)aniline. Examples of the heterocyclic compound containing nitrogen in the ring include pyridine, triazine, and melamine.

Specific examples of the phosphorus acid salt-containing flame retardant include mono-phosphorus acid salts and poly-phosphorus acid salts. The mono-phosphorus acid salt herein is not particularly limited and examples include ammonium salts such as ammonium phosphate, ammonium dihydrogen phosphate, and diammonium hydrogenphosphate, sodium salts such as monosodium phosphate, disodium phosphate, trisodium phosphate, monosodium phosphite, disodium phosphite, and sodium hypophosphite, potassium salts such as monopotassium phosphate, dipotassium phosphate, tripotassium phosphate, monopotassium phosphite, dipotassium phosphite, and potassium hypophosphite, lithium salts such as monolithium phosphate, dilithium phosphate, trilithium phosphate, monolithium phosphite, dilithium phosphite, lithium hypophosphite, barium salts such as barium dihydrogen phosphate, barium hydrogen phosphate, tribarium phosphate, and barium hypophosphite, magnesium salts such as magnesium monohydrogen phosphate, magnesium hydrogen phosphate, trimagnesium phosphate, and magnesium hypophosphite, calcium salts such as calcium dihydrogen phosphate, calcium hydrogen phosphate, tricalcium phosphate, and calcium hypophosphite, and zinc salts such as zinc phosphate, zinc phosphite, and zinc hypophosphite.

The poly-phosphorus acid salt herein is not particularly limited, and examples include ammonium polyphosphate, piperazine polyphosphate, melamine polyphosphate, ammonium amide polyphosphate, and aluminum polyphosphate.

For the phosphorus acid salt-containing flame retardant, those described above can be used singly, or used in combinations of two or more thereof.

(Bromine-containing flame retardant)

The bromine-containing flame retardant is not particularly limited as long as it has bromine in the molecular structure and is a compound which is solid at normal temperature (23°C) and normal pressure (1 atmosphere), and examples include brominated aromatic ring-containing aromatic compounds.

Examples of the brominated aromatic ring-containing aromatic compound include monomer organic bromine compounds such as hexabromobenzene, pentabromotoluene, hexabromobiphenyl, decabromobiphenyl, decabromodiphenyl ether, octabromodiphenyl ether, hexabromodiphenyl ether, bis(pentabromophenoxy)ethane, ethylenebis(pentabromophenyl), ethylenebis(tetrabromophthalimide), and tetrabromobisphenol A.

The brominated aromatic ring-containing aromatic compound can also be a bromine compound polymer. Specifically, examples include brominated polycarbonates such as polycarbonate oligomers produced using brominated bisphenol A as a material and copolymers of this polycarbonate oligomer and bisphenol A, and diepoxy compounds produced by the reaction of brominated bisphenol A and epichlorohydrin. Further examples include brominated epoxy compounds such as monoepoxy compounds obtained by the reaction of brominated phenols and epichlorohydrin, poly(brominated benzyl acrylate), condensates of brominated phenol of brominated polyphenylene ether, brominated bisphenol A, and cyanuric chloride, brominated polystyrenes such as brominated(polystyrene), poly(brominated styrene), and crosslinked brominated polystyrene, and crosslinked or non-crosslinked brominated poly(-methylstyrene).

Additionally, compounds other than the brominated aromatic ring-containing aromatic compounds such as hexabromocyclododecane are also acceptable.

These bromine-containing flame retardants can be used singly, or used in combinations of two or more thereof.

(Antimony-containing flame retardant)

Examples of the antimony-containing flame retardant include antimony oxides, antimonates, and pyroantimonate. Examples of the antimony oxide include antimony trioxides and antimony pentaoxides. Examples of the antimonate include sodium antimonates and potassium antimonates. Examples of the pyroantimonate include sodium pyroantimonate and potassium pyroantimonate.

The antimony-containing flame retardants can be used singly kind, or used in combinations of two or more thereof. The antimony-containing flame retardant used in the present invention is preferably an antimony oxide.

(Boron-containing flame retardant)

Examples of the boron-containing flame retardant used in the present invention include borax, boron oxides, boric acid, and borates. Examples of the boron oxide include diboron trioxides, boron trioxides, diboron dioxides, tetraboron trioxides, and tetraboron pentaoxides.

Examples of the borate include borates of alkali metals, alkali earth metals, elements of Group 4, Group 12, and Group 13 of the periodic table, and ammonium. Specific examples include alkali metal salts of boric acid such as lithium borates, sodium borates, potassium borates, and cesium borates, alkali earth metal salts of boric acid such as magnesium borates, calcium borates, and barium borates, and zirconium borates, zinc borates, aluminum borates, and ammonium borates.
The boron-containing flame retardants can be used singly, or used in combinations of two or more thereof.
The boron-containing flame retardant used in the present invention is preferably a borate, and more preferably zinc borate.

(Metal hydroxide)

Examples of the metal hydroxide used in the present invention include magnesium hydroxides, calcium hydroxides, aluminum hydroxides, iron hydroxides, nickel hydroxides, zirconium hydroxide, titanium hydroxides, zinc hydroxides, copper hydroxides, vanadium hydroxides, and tin hydroxides. The metal hydroxides can be used singly, or used in combinations of two or more thereof. The metal hydroxide is preferably aluminum hydroxide.

(Inorganic filler)

For the filler, an inorganic filler other than the above solid flame retardants can be used. Examples of the inorganic filler other than the solid flame retardants include silicas, alumina, titanium oxides, iron oxides, tin oxides, antimony oxides, ferrites, basic magnesium carbonates, calcium carbonates, magnesium carbonates, zinc carbonates, barium carbonates, dawsonite, hydrotalcites, calcium sulfates, barium sulfates, gypsum fibers, calcium silicates, zinc borates, talc, clays, micas, wollastonites, montmorillonites, bentonites, activated clays, sepiolite, imogolite, sericite, glass fibers, glass beads, silica balloons, aluminum nitrides, boron nitrides, silicon nitrides, carbon blacks, graphites, carbon fibers, carbon balloons, various metal powders, potassium titanate, magnesium sulfates, lead zirconate titanates, aluminum borates, molybdenum sulphides, silicon carbides, stainless fibers, various magnetic powders, slag fibers, fly ashes, silica-alumina fibers, alumina fibers, silica fibers, and zirconia fibers. These fillers can be used singly, or used in combinations of two or more thereof.
The amount of the filler contained in the polyol-containing composition is for example, 15 parts by mass or more, preferably 20 parts by mass or more, more preferably 25 parts by mass or more, and further preferably 40 parts by mass or more, per 100 parts by mass of the polyol. When the amount of the filler contained is the above-described lower limit value or more, the content of the filler can be a predetermined value or more, thereby sufficiently decreasing a water absorption rate of a polyurethane foam. The amount of the filler contained is preferably 90 parts by mass or less, more preferably 85 parts by mass or less, and further preferably 80 parts by mass or less, per 100 parts by mass of the polyol. When the amount of the filler contained is the upper limit value or less, the reactivity is not reduced, thereby easily obtaining a good foaming property.

<Phosphoric acid ester>

The polyol-containing composition of the present invention preferably comprises a flame retardant other than the above solid flame retardants. Examples of such a flame retardant include flame retardants which are liquid at normal temperature (23°C) and normal pressure (1 atmosphere), and specific examples include phosphoric acid esters. The use of a phosphoric acid ester is likely to enhance the fire retardancy of a urethane foam without reducing the fluidity of the polyol-containing composition.
For the phosphoric acid ester, monophosphoric acid esters, condensed phosphoric acid esters and the like can be used. A monophosphoric acid ester is a phosphoric acid ester which has a single phosphorus atom in a molecule. Examples of the monophosphoric acid ester include trialkyl phosphates such as trimethyl phosphate, triethyl phosphate, tributyl phosphate, and tri(2-ethylhexyl)phosphate, halogen-containing phosphoric acid esters such as tris(β-chloropropyl)phosphate, trialkoxy phosphates such as tributoxyethyl phosphate, aromatic ring-containing phosphoric acid esters such as tricresyl phosphate, trixylenyl phosphate, tris(isopropylphenyl)phosphate, cresyl diphenyl phosphate, diphenyl(2-ethylhexyl)phosphate, and acidic phosphoric acid esters such as monoisodecyl phosphate and diisodecyl phosphate.
Examples of the condensed phosphoric acid ester include trialkyl polyphosphate, and aromatic condensed phosphoric acid esters such as resorcinol polyphenyl phosphate, bisphenol A polycresyl phosphate, and bisphenol A polyphenyl phosphate.
Examples of the commercial product of the condensed phosphoric acid ester include "CR-733S", "CR-741", and "CR747" manufactured by Daihachi Chemical Industry Co., Ltd., and "Adeka Stab PFR" and "FP-600" manufactured by ADEKA CORPORATION.
The phosphoric acid esters can be used singly, or used in combinations of two or more from those described

above. Of these, monophosphoric acid esters are preferable, with halogen-containing phosphoric acid esters such as tris(β-chloropropyl)phosphate being more preferably in view of easily adjusting a viscosity of the polyol-containing composition to be suitable and in view of enhancing the fire retardancy of a polyurethane foam.

The amount of the phosphoric acid ester contained in the polyol-containing composition is preferably 5 to 100 parts by mass, more preferably 12 to 90 parts by mass, further preferably 20 to 75 parts by mass, and furthermore preferably 30 to 50 parts by mass, per 100 parts by mass of the polyol.

<Foam stabilizer>

The polyol-containing composition of the present invention can also comprise a foam stabilizer for the purpose of easily foaming a mixture of the polyol-containing composition and the isocyanate.

Examples of the foam stabilizer include surfactants such as polyoxyalkylene foam stabilizers such as polyoxyalkylene alkyl ether and silicone foam stabilizers such as octamethylcyclotetrasiloxane and organopolysiloxane. These foam stabilizers can be used singly, or used in combinations of two or more thereof.

The amount of the foam stabilizer contained in the polyol-containing composition of the present invention is preferably 0.1 to 12 parts by mass, more preferably 1 to 10 parts by mass, and further preferably 2 to 8 parts by mass, per 100 parts by mass of the polyol. When the amount of the foam stabilizer contained is the above-described lower limit value or more, a mixture of the polyol-containing composition and the polyisocyanate is easily foamed, thereby enabling homogeneous polyurethane foam to be obtained. When the amount of the foam stabilizer contained is the above-described upper limit value or less, the balance of a production cost and the effects to be obtained is optimal.

<Other components>

The polyol-containing composition can comprise one or more selected from the group consisting, for example of antioxidants such as phenol antioxidants, amine antioxidants, and sulfur antioxidants, heat stabilizers, metal toxicity inhibitors, antistatic agents, stabilizers, cross-linking agents, lubricants, softeners, and pigments, if needed, as long as they are not contradictory to the purposes of the present invention.

<Method for producing the polyol-containing composition>

The method for producing the polyol-containing composition of the present invention is not particularly limited and, for example, the composition can be produced by stirring the components at about 20 to 40°C for about 30 seconds to 20 minutes using a homodisper or the like.

[Foamable polyurethane composition and polyurethane foam]

The foamable polyurethane composition of the present invention comprises the polyol-containing composition of the present invention and the polyisocyanate and is obtained by mixing them. The polyurethane foam of the present invention is the reaction product obtained by reacting and foaming the foamable polyurethane composition.

<Polyisocyanate>

Examples of the polyisocyanate include aromatic polyisocyanates, alicyclic polyisocyanates, and aliphatic polyisocyanates.

Examples of the aromatic polyisocyanate include phenylene diisocyanate, tolylene diisocyanate, xylylene diisocyanate, diphenylmethane diisocyanate, dimethyl diphenylmethane diisocyanate, triphenylmethane triisocyanate, naphthalene diisocyanate, and polymethylene polyphenyl polyisocyanate.

Examples of the alicyclic polyisocyanate include cyclohexylene diisocyanate, methylcyclohexylene diisocyanate, isophorone diisocyanate, dicyclohexylmethane diisocyanate, and dimethyldicyclohexylmethane diisocyanate.

Examples of the aliphatic polyisocyanate include methylene diisocyanate, ethylene diisocyanate, propylene diisocyanate, tetramethylene diisocyanate, and hexamethylene diisocyanate.

Of these, aromatic polyisocyanates are preferable, and diphenylmethane diisocyanate are more preferable in view of ease to use and availability. The polyisocyanates can be used singly, and used in combinations of two or more thereof.

Known additives for polyisocyanates can be suitably blended with the polyisocyanate before mixed with the polyol-containing composition.

It is preferable that the polyol-containing composition and the polyisocyanate to be mixed with the polyol-containing composition have substantially the same volume to each other. Specifically, the volume ratio of the polyisocyanate to the polyol-containing composition is preferably 0.8 to 1.2, more preferably 0.9 to 1.1, and further preferably 0.95 to 1.05.

The content of the filler in the foamable polyurethane composition is for example, 4 parts by mass or more, preferably 6 parts by mass or more, more preferably 8 parts by mass or more, and further preferably 10 parts by mass or more, per 100 parts by mass of a urethane resin. When the content of the filler in the foamable polyurethane composition is the above-described lower limit value or more, the ratio of the filler in a polyurethane foam can be sufficient, thereby decreasing the water absorption rate of the polyurethane foam and thus well preventing the hydrolysis. The content of the filler is preferably 30 parts by mass or less, more preferably 25 parts by mass or less, and further preferably 20 parts by mass or less, per 100 parts by mass of a urethane resin. When the content of the filler is these lower limit values or more, a polyurethane foam having a good foaming property is likely to be obtained. The urethane resin means the total amount of the polyol and the polyisocyanate to be blended into the foamable polyurethane composition.

<Isocyanate index>

The isocyanate index of the polyurethane foam of present invention is not particularly limited but is preferably 250 or more. When the isocyanate index is the above-described lower limit value or more, the amount of the polyisocyanate relative to the polyol is excess, and the isocyanurate bond by trimerized polyisocyanates is easily produced, thereby enhancing the fire retardancy of a polyurethane foam. Additionally, non-flammability can also be imparted. Further, when the isocyanate index is the above-described lower limit value or more, combined with the use of various catalysts described above, a polyurethane foam having sufficient isocyanurate bonds, that is, a polyurethane foam having both fire retardancy and thermal insulation at high levels can be easily produced. From these viewpoints, the isocyanate index is more preferably 250 or more, further preferably 300 or more, and furthermore preferably 335 or more.

Further, the isocyanate index is preferably 1,000 or less, more preferably 800 or less, and further preferably 600 or less. When the isocyanate index is the above-described upper limit value or less, the balance of the fire retardancy to be obtained and a production cost of a polyurethane foam is good.

The isocyanate index can be calculated by the following method.

$$\text{Isocyanate index} = \text{number of equivalents of polyisocyanate} / (\text{number of equivalents of polyol} + \text{number of equivalents of water}) \times 100$$

Each of the number of equivalents herein can be calculated as follows.

$$\cdot\ \text{Number of equivalents of polyisocyanate} = \text{amount of polyisocyanate used (g)} \times \text{NCO content (mass\%)}/\text{molecular weight of NCO (mol)} \times 100$$

$$\cdot\ \text{Number of equivalents of polyol} = \text{OHV} \times \text{amount of polyol used (g)} \div \text{molecular weight of KOH (mmol)}$$

OHV is the hydroxy value of the polyol (mg KOH/g).

$$\cdot\ \text{Number of equivalents of water} = \text{amount of water used (g)}/\text{molecular weight of water (mol)} \times \text{number of OH groups of water}$$

In the above formulae, the molecular weight of NCO is 42 (mol), the molecular weight of KOH is 56,100 (mmol), the molecular weight of water is 18 (mol), and the number of OH groups of water is 2.

<Method for producing a polyurethane foam>

The method for producing a polyurethane foam is not particularly limited, and a foamable polyurethane composition obtained by mixing the polyisocyanate and the polyol-containing composition can be foamed and reacted.

Specifically, it is preferable that the polyisocyanate and the polyol-containing composition be collisionally mixed and applied by spraying using a spray gun.

Further, in the present invention, the polyisocyanate and the polyol-containing composition can be mixed, then injected to a container such as a mold or a frame, and cured thereby to obtain the foamable polyurethane composition.

<Water absorption rate of the polyurethane foam>

The water absorption rate of the polyurethane foam obtained by reacting and foaming the foamable polyurethane composition of the present invention is preferably 1.5 g/100 $cm^2$ or less. When the water absorption rate of the polyurethane foam to be obtained is 1.5 g/100 $cm^2$ or less, the hydrolysis of the polyurethane foam can be sufficiently prevented. The water absorption rate of the polyurethane foam is preferably 1.3 g/100 $cm^2$ or less, more preferably 1.1 g/100 $cm^2$ or less, and further preferably 1.0 g/100 $cm^2$ or less, in view of well preventing the hydrolysis of the polyurethane foam.

The water absorption rate of the polyurethane foam is measured by the method described in Examples later.

<Use of the polyurethane foam >

The use of the polyurethane foam of the present invention is not particularly limited; however, since the polyurethane foam has excellent fire retardancy and thermal insulation, it can be preferably used for architectural structures such as walls, ceilings, roofs, and floors of architectural structures. The polyurethane foam can also preferably used as the member for filling any openings caused in architectural structures, including masonry joints and holes caused between constructional materials of architectural structures.

Examples

Hereinafter, the present invention will be more specifically described in reference with examples but is not limited thereto.

1. Production of polyurethane foams

Polyol-containing compositions and polyisocyanates were separately prepared according to the formulations shown in Table 1 to obtain the polyurethane foams of Examples and Comparative Examples. Details of the components in the table are as follows.

(1) Polyol-containing composition

[Polyols]

- p-Phthalic acid polyester polyol (manufactured by KAWASAKI KASEI CHEMICALS LTD., product name: MAXIMOL RLK-087, hydroxy value = 200 mg KOH/g)
- p-Phthalic acid polyester polyol (manufactured by KAWASAKI KASEI CHEMICALS LTD., product name: MAXIMOL RFK-505, hydroxy value = 250 mg KOH/g)

[Catalysts]

- Amine catalyst for resinification, 1,2-dimethylimidazole (manufactured by Tosoh Corporation, product name: TOYOCAT (registered trademark)-DM70), concentration 65 to 75 mass%
- Amine catalyst for resinification, 1-isobutyl-2-methylimidazole (manufactured by Air Products and Chemicals, Inc., product name: DABCO NC-IM), concentration about 98 mass%
- Metal catalyst for resinification, bismuth trioctate (manufactured by NITTO KASEI CO., LTD., product name: Neostann U-600), concentration 55 to 58 mass%
- Metal catalyst for resinification, dioctyltin versatate (manufactured by NITTO KASEI CO., LTD., product name: Neostann U-830), concentration about 99 mass%
- Metal catalyst (trimerization catalyst), potassium 2-ethylhexanoate (manufactured by Air Products and Chemicals,

Inc., product name: DABCO K-15), concentration 70 to 80 mass%

[Foaming agents]

- Hydrofluoroolefin (HFO, manufactured by Honeywell Japan Ltd, product name: Solstice LBA, trans-1-chloro-3,3,3-trifluoropropene)
- Water

[Flame retardant]

- Tris(β-chloropropyl)phosphate (manufactured by Daihachi Chemical Industry Co., Ltd., product name: TMCPP)

[Fillers]

- Red phosphorus (manufactured by RIN KAGAKU KOGYO Co., Ltd., product name: Nova Excel 140)
- Zinc borate (manufactured by HAYAKAWA & CO., LTD., product name: Firebrake ZB)
- Wollastonite ($SiO_2 \cdot CaO$) (manufactured by KINSEI MATEC CO., LTD., product name: SH-1250)
- Antimony trioxide (manufactured by NIHON SEIKO CO., LTD., product name: PATOX-C)
- Aluminum hydroxide (manufactured by ALMORIX LTD., product name: B-325)

(2) Polyisocyanate

- 4,4'-Diphenylmethane diisocyanate (4,4'-MDI) (manufactured by Wanhua Chemical Japan Co., Ltd., product name: PM200)

The polyurethane foam in each of Examples and Comparative Examples was formed by following the procedure below.

The polyisocyanate was added in the blending ratio shown in Table 1 to 100 g of a kneaded product of the components of the polyol-containing composition shown in the formulation of Table 1. The resultant was stirred until homogeneously mixed at an outside temperature of 20°C and a solution temperature of 15 ± 1°C using a hand mixier (high-speed disperser HOMOGENIZING MIXER Model 2.5, manufactured by PRIMIX Corporation) at a rotation speed of 8,000 rpm to make a foamable polyurethane resin composition. The obtained foamable polyurethane resin composition lost the fluidity in the course of time, thereby obtaining a foam of the foamable polyurethane resin composition (polyurethane foam).

2. Evaluation

Evaluations were made according to the following criteria.

[Filler content]

The filler content of the polyurethane foam was calculated by the following method.

(1) The weight (g) of the polyol-containing composition used for forming the polyurethane foam, weight A, was measured.
(2) A Kiriyama funnel filter paper (manufactured by NIPPON RIKAGAKU KIKAI CO., LTD., acid and alkali resistant, No.2) was provided to use for separating the filler in the polyol-containing composition, and the weight (g) of the Kiriyama funnel filter paper, weight B, was measured.
(3) The polyol-containing composition was filtered through the Kiriyama funnel. Then, the Kiriyama funnel filter paper used for the filtration was rinsed with acetone to wash off surpluses attached to the Kiriyama funnel filter paper and

the filler. The filtration with the Kiriyama funnel filter paper and the following washing were carried out under the room temperature (23°C) environment.
The rinsed Kiriyama funnel filter paper was dried in an oven at 40°C for 30 minutes and the weight (g) of the dried Kiriyama funnel filter paper, weight C, was measured.
(4) The filler content was calculated by the following formula. The results are shown in Table 1.

$$\text{Filler content (mass\%)} = 100 \text{ x } (\text{C-B})/\text{A}$$

[Water absorption rate]

The water absorption rate of the polyurethane foam made by the above method was calculated by the following method.

(1) A test piece having a size of width 100 mm x length 100 mm x thickness 20 mm was cut out from the obtained polyurethane foam.
(2) The test piece was immersed in water for 24 hours under an atmosphere of a temperature of 22.5°C and a humidity of 55% and then taken out from water. The weight (g) of the test piece after the water was removed from the surface, weight X, was measured.
(3) The test piece was immersed in water for 10 seconds under an atmosphere of a temperature of 22.5°C and a humidity of 55% and then taken out from water. The weight (g) of the test piece after the water was removed from the surface, weight Y, was measured.
(4) A water absorption rate of the polyurethane foam was calculated by the following formula. The results are shown in Table 1.

$$\text{Water absorption rate (g/100 cm}^2\text{)} = (\text{X-Y})/(\text{surface area of test piece})/100$$

Test pieces having a water absorption rate of 1.5 or less were rated as "A", and those with over 1.5 were "B".

[Foaming property]

The polyurethane foam made by the above method was cut out, and the cross section was observed using a microscope. As a result of the observation, the polyurethane foams showing fine homogeneous foamed cells were rated as "A", those with rather large and/or rather nonhomogeneous cell diameters of foamed cells were "B", and those with large and/or nonhomogeneous cell diameters of broken foamed cells were "C". The results are shown in Table 1.

Table 1

| | | | Examples | | | | | | | | | | | | | | | | Comparative Examples | | | | | |
|---|---|---|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 1 | 2 | 3 | 4 | 5 | 6 |
| Polyisocyanate (parts by mass) | | PM200 | 75.5 | 76.1 | 75.5 | 75.5 | 75.5 | 75.5 | 75.5 | 75.5 | 75.5 | 75.5 | 75.5 | 75.5 | 75.5 | 76.1 | 70.8 | 78.7 | 75.5 | 75.5 | 75.5 | 75.5 | 75.5 | 76.1 |
| Polyol-containing composition (parts by mass) | Polyol | RLK-087 | 14.7 | 9.6 | 14.7 | 14.7 | 14.7 | 14.7 | 14.7 | 14.7 | 14.7 | 14.7 | 14.7 | 14.7 | 14.7 | 9.6 | 29.2 | | 14.7 | 14.7 | 14.7 | 14.7 | 14.7 | 9.6 |
| | | RFK-505 | 9.8 | 14.3 | 9.8 | 9.8 | 9.8 | 9.8 | 9.8 | 9.8 | 9.8 | 9.8 | 9.8 | 9.8 | 9.8 | 14.3 | | 21.3 | 9.8 | 9.8 | 9.8 | 9.8 | 9.8 | 14.3 |
| | Catalyst | TOYOCAT DM70 | 0.10 | 0.10 | 0.10 | 0.10 | 0.10 | 0.10 | 0.10 | 0.10 | 0.10 | | 0.08 | 0.12 | | 0.10 | 0.12 | 0.09 | 0.10 | 0.10 | 0.10 | 0.10 | 0.10 | 0.10 |
| | | DABCO NCIM | | | | | | | | | | | | | 0.10 | | | | | | | | | |
| | | Neostann U-600 | 0.05 | 0.05 | 0.05 | | 0.05 | 0.05 | 0.05 | 0.05 | 0.05 | 0.1 | 0.04 | 0.06 | 0.05 | 0.05 | 0.06 | 0.04 | 0.05 | 0.05 | 0.05 | 0.05 | | |
| | | Neostann U-830 | | | | 0.05 | | | | | | | | | | | | | | | | | | |
| | | DABCO K-15 | 0.37 | 0.38 | 0.37 | 0.37 | 0.37 | 0.37 | 0.37 | 0.37 | 0.37 | 0.42 | 0.3 | 0.41 | 0.37 | 0.38 | 0.44 | 0.33 | 0.37 | 0.37 | 0.37 | 0.37 | 0.37 | 0.38 |
| | Foaming agent | HFO | 5.9 | 7.6 | 5.9 | 5.9 | 5.9 | 5.9 | 5.9 | 5.9 | 5.9 | 5.9 | 5.9 | 5.9 | 5.9 | 7.6 | 7.0 | 5.1 | 5.9 | 5.9 | 5.9 | 5.9 | 5.9 | 7.6 |
| | | Water | 0.61 | 0.62 | 0.61 | 0.61 | 0.61 | 0.61 | 0.61 | 0.61 | 0.61 | 0.61 | 0.61 | 0.61 | 0.61 | 0.62 | 0.74 | 0.53 | 0.61 | 0.61 | 0.61 | 0.61 | 0.61 | 0.62 |
| | Flame retardant | TMCPP | 9.8 | 7.3 | 9.8 | 9.8 | 9.8 | 9.8 | 9.8 | 9.8 | 9.8 | 9.8 | 9.8 | 9.8 | 9.8 | | 11.7 | 8.5 | 9.8 | 9.8 | 9.8 | 9.8 | 9.8 | 7.3 |
| | Filler | Nova Excel 140 | 7.3 | 9.3 | | 7.3 | 7.3 | 7.3 | 7.3 | 7 | 5 | 7.3 | 7.3 | 7.3 | 7.3 | 7.3 | 8.7 | 6.3 | 3 | | | | 7.3 | 9.3 |
| | | Firebrake ZB | 2.0 | | 9.0 | 2.0 | 2.0 | 2.0 | 2.0 | | | 2.0 | 2.0 | 2.0 | 2.0 | | | 1.7 | | 3 | | | 2.0 | |
| | | SH-1250 | 7.3 | 9.3 | 9.0 | 7.3 | | | | | | 7.3 | 7.3 | 7.3 | 7.3 | 7.3 | 8.7 | 6.3 | | | 3 | | 7.3 | 9.3 |
| | | Antimony trioxide | | | | | 7.3 | | | | | | | | | | | | | | | | | |
| | | Aluminum hydroxide | | | | | | 7.3 | | | | | | | | | | | | | | | | |

(continued)

| | | Examples | | | | | | | | | | | | | | | | Comparative Examples | | | | | |
|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 1 | 2 | 3 | 4 | 5 | 6 |
| Properties·Evaluation | Filler content (mass%) | 29 | 32 | 30 | 29 | 29 | 29 | 18 | 14 | 11 | 29 | 29 | 29 | 29 | 31 | 26 | 29 | 7 | 7 | 7 | 0 | 29 | 32 |
| | Isocyanate index | 343 | 339 | 343 | 343 | 343 | 343 | 343 | 343 | 343 | 343 | 343 | 343 | 343 | 334 | 254 | 448 | 343 | 343 | 343 | 343 | 343 | 339 |
| | Water absorption rate (g/100 $cm^2$) | 0.87 | 0.86 | 0.88 | 0.95 | 1.02 | 0.98 | 1.26 | 1.32 | 1.40 | 0.93 | 0.95 | 0.91 | 0.89 | 0.90 | 1.13 | 1.18 | 1.55 | 1.53 | 1.57 | 1.93 | 0.89 | 0.88 |
| | Water absorption rate (evaluation) | A | A | A | A | A | A | A | A | A | A | A | A | A | A | A | A | B | B | B | B | A | A |
| | Foaming property | A | A | A | B | A | A | A | A | A | B | B | B | B | B | A | A | A | A | A | A | C | C |

As evident from the above results of the examples, when the content of the filler in the polyol-containing composition is a specific value or more, the water absorption rates of the polyurethane foams were decreased, thereby preventing the polyurethane foams from hydrolyzing. Further, when specific catalysts were contained in the polyol-containing compositions, the foaming property was enhanced.

## Claims

1. A polyol-containing composition for obtaining a polyurethane foam by reacting with a polyisocyanate, the polyol-containing composition comprising a polyol, a catalyst, a foaming agent, and a filler,

   a content of the filler in the polyol-containing composition being 8 mass% or more,
   the catalyst comprising a metal catalyst containing at least one selected from the group consisting of bismuth and tin.

2. The polyol-containing composition according to claim 1, wherein the metal catalyst contains bismuth.

3. The polyol-containing composition according to claim 1 or 2, wherein the catalyst further comprises an imidazole derivative.

4. The polyol-containing composition according to claim 3, wherein the imidazole derivative is imidazole substituted on the $1^{st}$ position and the $2^{nd}$ position each independently with an alkyl group having 4 or less carbon atoms.

5. The polyol-containing composition according to claim 3 or 4, wherein the imidazole derivative is at least one selected from the group consisting of 1,2-dimethylimidazole and 1-isobutyl-2-methylimidazole.

6. A foamable polyurethane composition comprising the polyol-containing composition according to any one of claims 1 to 5 and a polyisocyanate.

7. The foamable polyurethane composition according to claim 6, wherein a content of the filler in the foamable polyurethane composition is 4 parts by mass or more per 100 parts by mass of a urethane resin.

8. The foamable polyurethane composition according to claim 6 or 7, wherein a water absorption rate of a polyurethane foam obtained by reacting and foaming the foamable polyurethane composition is 1.5 g/100 $cm^2$ or less.

9. The foamable polyurethane composition according to any one of claims 6 to 8, wherein the foamable polyurethane composition has an isocyanate index of 250 or more.

10. A polyurethane foam obtained by reacting and foaming the foamable polyurethane composition according to any one of claims 6 to 9.

## INTERNATIONAL SEARCH REPORT

International application No. PCT/JP2020/029525

A. CLASSIFICATION OF SUBJECT MATTER
C08G 18/22(2006.01)i; C08G 18/00(2006.01)i; C08G 18/08(2006.01)i; C08G 101/00(2006.01)n
FI: C08G18/22; C08G18/00 J; C08G18/08 038; C08G101 :00

According to International Patent Classification (IPC) or to both national classification and IPC

B. FIELDS SEARCHED

Minimum documentation searched (classification system followed by classification symbols)
C08G18/00-18/87; C08L75/00-75/16; C08G101/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 2018-30975 A (SEKISUI CHEMICAL CO., LTD.) 01.03.2018 (2018-03-01) claims, paragraph [0061], column "examples", etc. | 1-10 |
| X | WO 2018/105730 A1 (SEKISUI CHEMICAL CO., LTD.) 14.06.2018 (2018-06-14) claims, column "examples" (for example, example 8), etc. | 1-10 |
| X | JP 2015-59321 A (SEKISUI CHEMICAL CO., LTD.) 30.03.2015 (2015-03-30) claims, paragraph [0049], column "examples", etc. | 1-10 |
| X | JP 2018-100404 A (SEKISUI CHEMICAL CO., LTD.) 28.06.2018 (2018-06-28) claims, paragraph [0044], column "examples" (for example, examples 5, 13), etc. | 1-10 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 October 2020 (09.10.2020) | 20 October 2020 (20.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/029525

C (Continuation). DOCUMENTS CONSIDERED TO BE RELEVANT

| Category* | Citation of document, with indication, where appropriate, of the relevant passages | Relevant to claim No. |
|---|---|---|
| X | JP 2018-100405 A (SEKISUI CHEMICAL CO., LTD.) 28.06.2018 (2018-06-28) claims, paragraph [0044], column "examples" (for example, examples 5, 13), etc. | 1-10 |
| X | JP 2018-80328 A (SEKISUI CHEMICAL CO., LTD.) 24.05.2018 (2018-05-24) claims, paragraphs [0049], [0055], column "examples" (for example, example 5), etc. | 1-10 |
| X | JP 2013-227519 A (SANYO CHEMICAL INDUSTRIES, LTD.) 07.11.2013 (2013-11-07) claims, paragraph [0086], column "examples" (for example, example 3), etc. | 1-10 |
| X | JP 2016-199732 A (SANYO CHEMICAL INDUSTRIES, LTD.) 01.12.2016 (2016-12-01) claims, paragraphs [0022], [0026], column "examples", etc. | 1-10 |
| X | JP 6-199973 A (SANYO CHEMICAL INDUSTRIES, LTD.) 19.07.1994 (1994-07-19) claims, paragraphs [0012], [0016], column "examples" (for example, examples 4, 7), etc. | 1-10 |
| X | JP 2010-247532 A (INOAC CORP.) 04.11.2010 (2010-11-04) claims, paragraph [0023], column "examples", etc. | 1-10 |
| X | JP 2007-39632 A (INOAC CORP.) 15.02.2007 (2007-02-15) claims, column "examples" (for example, examples 8, 12), etc. | 1-10 |
| X | JP 2012-532237 A (BAYER MATERIALSCIENCE AG.) 13.12.2012 (2012-12-13) claims, column "examples" (for example, table 1, [4]), etc. | 1-10 |
| X | JP 2005-350638 A (KANAI EDUCATIONAL INSTITUTION) 22.12.2005 (2005-12-22) claims, column "examples", etc. | 1-10 |
| A | JP 2013-107962 A (SANYO CHEMICAL INDUSTRIES, LTD.) 06.06.2013 (2013-06-06) | 1-10 |
| P,X | WO 2020/067139 A1 (SEKISUI CHEMICAL CO., LTD.) 02.04.2020 (2020-04-02) claims, column "examples", etc. | 1-10 |
| P,X | WO 2020/122237 A1 (SEKISUI CHEMICAL CO., LTD.) 18.06.2020 (2020-06-18) claims, column "examples", etc. | 1-10 |

Form PCT/ISA/210 (continuation of second sheet) (January 2015)

**INTERNATIONAL SEARCH REPORT**
Information on patent family members

International application No. PCT/JP2020/029525

| Patent Documents referred in the Report | Publication Date | Patent Family | Publication Date |
|---|---|---|---|
| JP 2018-30975 A | 01 Mar. 2018 | (Family: none) | |
| WO 2018/105730 A1 | 14 Jun. 2018 | US 2020/0002458 A1 claims, column "examples" (for example, example 8), etc. EP 3553102 A1 | |
| JP 2015-59321 A | 30 Mar. 2015 | (Family: none) | |
| JP 2018-100404 A | 28 Jun. 2018 | (Family: none) | |
| JP 2018-100405 A | 28 Jun. 2018 | (Family: none) | |
| JP 2018-80328 A | 24 May 2018 | (Family: none) | |
| JP 2013-227519 A | 07 Nov. 2013 | (Family: none) | |
| JP 2016-199732 A | 01 Dec. 2016 | (Family: none) | |
| JP 6-199973 A | 19 Jul. 1994 | (Family: none) | |
| JP2010-247532 A | 04 Nov. 2010 | CN 101850639 A KR 10-2010-0106929 A | |
| JP 2007-39632 A | 15 Feb. 2007 | (Family: none) | |
| JP 2012-532237 A | 13 Dec. 2012 | US 2012/0108690 A1 claims, column "examples" (for example, table 1, [4]), etc. WO 2011/003590 A2 | |
| JP 2005-350638 A | 22 Dec. 2005 | (Family: none) | |
| JP 2013-107962 A | 06 Jun. 2013 | (Family: none) | |
| WO 2020/067139 A1 | 02 Apr. 2020 | (Family: none) | |
| WO 2020/122237 A1 | 18 Jun. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H08295718 A